# EUROPEAN PATENT SPECIFICATION

(11) **EP 1 348 210 B1**
(45) Date of publication and mention of the grant of the patent: **26.07.2006**
(21) Application number: 01999932.5
(22) Date of filing: 04.12.2001
(51) Int. Cl.: G09F 13/18

(54) **SIGN OF ADVERTISEMENT BOARD**
SCHILD ODER WERBEBRETT
PANNEAU INDICATEUR OU PUBLICITAIRE

(30) Priority: 04.12.2000 FI 20000478 U
(43) Date of publication of application: 01.10.2003
(73) Proprietor: Talstila, Pekka, 03100 Nummela (FI)
(72) Inventor: Talstila, Pekka, 03100 Nummela (FI)
(74) Representative: Laitinen, Pauli Sakari
(86) International application number: PCT/FI2001/001056
(87) International publication number: WO 2002/047055

(56) References cited:
- EP-A2- 0 306 659
- DE-A1- 3 919 925
- SE-C2- 512 420
- US-A- 1 364 916
- US-A- 2 634 530

## Description

present invention relates to an illuminated board, which is particularly suitable for use as, without however being restricted to, for example, an advertising board or guide board in a suitable location.

Indicator and advertising boards equipped with a light have been used for a very long time for transmitting various kinds of signals. Often the illumination is by means of conventional lamps, which, when it is dark or at times when it is wished to draw particular attention, are switched on to illuminate the usually board-like object. In terms of attracting attention, such objects are rather modest.

Various solutions are also known, in which the illumination blinks or pulses, in order to draw attention. In that case, the object itself is typically formed from illuminated elements, as is the case in so-called neon lights. It is then also possible to use tubes of different colours, to create hues of colour. Though the use of neon lights is of course effective in certain conditions, it is very expensive, for example, to form an advertisement from neon tubes, while the need to replace the tubes greatly increases the operating costs.

Light-emitting diodes, or LEDs, have also been used for various advertising and indicator purposes, to create light in objects that it is wished to accentuate and also to form points of light, from which it is possible to create various patterns, if it is so wished. LEDs are an alternative for the purpose described, being both durable and nowadays also quite economical.

The principle of illuminating a panel like component with several light emitting diodes located on the edge of the panel is previously known e.g. from the publications SE 512 420, DE 39 19 925 and EP 306 659. In each of these publications the light emitting diodes are placed into the vicinity of the edge of the panel or even sinked into the panel material.

The present invention is intended to create an advertising or indicator device of the above referenced type. The device is applicable to many purposes and is economical, having properties that can compete with any presently known similar device. The particular purpose that greatly arouses attention and opens further possibilities is that of creating a spectrum of steplessly variable hues of colour.

The above and other benefits and advantages of this invention are created in the manner stated as characteristic in the accompanying Claims.

In the following, the invention is described in greater detail with reference to the accompanying schematic and non-restrictive drawings, which show, as an example, one well-regarded embodiment of the invention.

Thus:
Figure 1 shows the construction of one device according to the invention in a partly transparent perspective view;
Figure 2 shows a cross-section A-A of Figure 1; and
Figure 3 shows in turn an enlarged detail of element 4 of Figure 1.

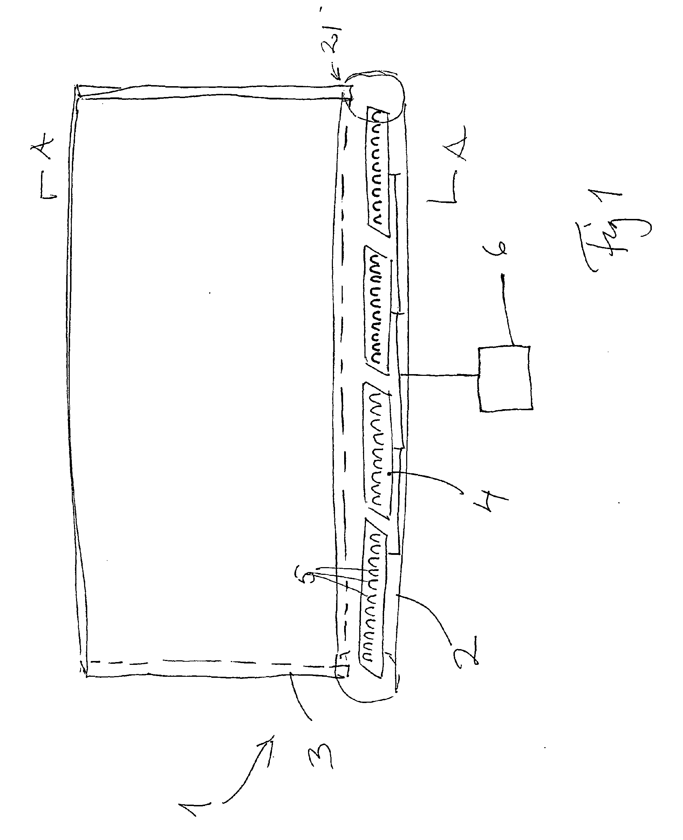

In the embodiment of Figure 1, the device 1 comprises a few principal components. Thus, the board 3 or similar is a sheet of transparent material, on which is placed, usually on its rear surface as seen by the viewer, the desired text or image to which it is wished to attract the viewer's attention. Light is emitted into the edge of the sheet by a light element 4 containing light-emitting diodes 5, which element comprises either a single element extending essentially from one side of the device to the other, or several successive elements 4, four of which are shown in Figure 1.

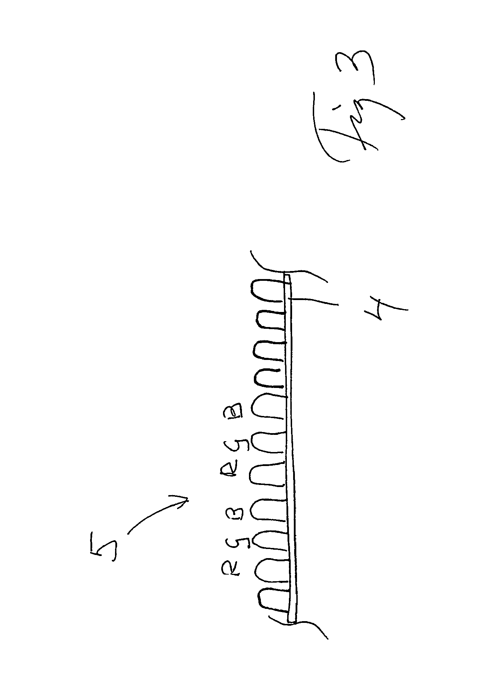

In the elements 4, the LEDs 5 are in a specific sequence, in this case they form a simple row. The enlarged part view of Figure 3 shows that the LEDs 5 can be arranged so that LEDs emitting red, green, and blue light are set one after the other to form a group of three LEDs. However, in terms of the invention it is of no consequence how the positions of the LEDs are configured, what is important is that by using these three colours it is possible to suitably vary their relationships, to create all the colours in the world.

The light-emitting diodes 5 send light towards the edge of the sheet-like component 3 manufactured from a transparent material, such as glass or so-called plexiglass. In a conventional manner, the light spreads over the whole extent of the component 3, simultaneously illuminating anything that is written or drawn on it. As is known, the light effect will be different, if the sheet 3 is made to refract the light. This can be achieved simply by, for example, making an incision in the rear side of the sheet 3 along the outside of the image to be displayed, the wall of which incision will refract the light and thus make the outline appear more clearly than the rest of the area. Other kinds of treatment of the surface of the sheet, such as, for instance, sand blasting, can also refract the light and create a desired light effect.

Figure 1 shows the protective component 2 as a simple, essentially tube-like component, which is intended to hide the light panels 4 from view and act, if necessary, as a kind of base for the device. The casing 2 can also, if required, act as a kind of advertising space, on which text or images can be attached in an appropriate manner. For example, the casing 2 can include the manufacturer's contact information. It is obvious that the cover also prevents dirtying. On one side of the cover 2 there is an opening 21, through which the edge of the sheet-like component 3 is pushed into the casing.

Also in Figure 1 is a component 6 drawn as a simple box, which in this case represents the control unit for the LEDs. The size of the unit 6 is such that it can equally well be inside the casing 2, or the unit 6 can be simply, for instance, an RS connector, to which an external control unit, for example a computer, is connected. In any event, the unit 6 is intended to control the mutual relationships between the LEDs 5 so as to create the desired colour effect. Because this is a technique that is, as such, known, it will not be dealt with in greater detail. However, as one versed in the art will know perfectly well, it is possible, according to the invention, to create any hue whatever in the area of the sheet 3. The intensity of the hue can be varied by adjusting the brightness of the LEDs while the hue itself is created by adjusting the mutual relationships of the red, green, and blue light. According to the invention, the LEDs can be programmed in any way whatever to display moving zones of colour and other effects.

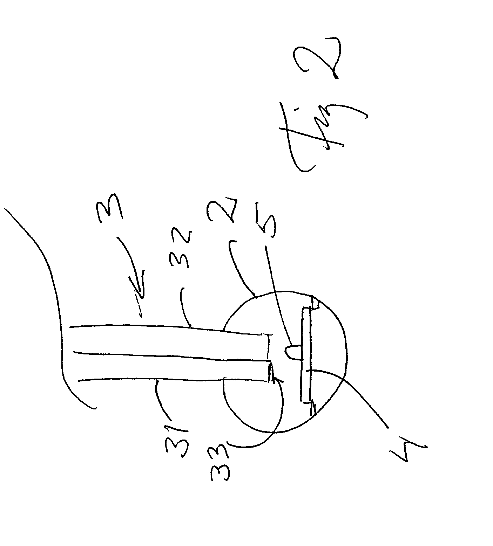

Figure 2 shows a cross-section of the device of Figure 1. In this case, the cross-section has been adapted so that two sheet-like components 31 and 32 are now used. Assuming that the viewer is on the right-hand side of the figure, the side of the rear sheet 31 facing the front sheet 32 can be surfaced with a suitable background image and, if necessary, the path of the light to the sheet 31 can be broken by giving the edge 33 of the sheet 31 facing the LEDs a suitably opaque finish. The surface of sheet 32 facing sheet 31, on the other hand, can be equipped with the actual images or text, which can be altered, parts of which are engraved as desired to refract light and create effects, as described previously above. The lower edge of sheet 32 is not covered.

The invention can be varied to a very great extent, in terms of size, shape, or location. Thus, a device like that described can be suspended to hang in a desired place. On the other hand, smaller devices can be placed on tables or other surfaces, with the aid of suitable means. It is also possible to place a device, or a group of devices as a fixed or detachable part, for example, of furnishings. Thus, for example, in banks or other places containing various service points, the guidance of customers can be arranged conveniently by using a device according to the invention, which is equipped with certain effects for attracting attention, for guidance purposes.

## Claims

1. An indicator or advertising board (1) including a display component (3) of essentially sheet-like, transparent material and an illuminating component implemented with the aid of light-emitting diodes (5), which are located in the immediate vicinity of the edge of the sheet-like display component, to light the sheet through the edge, **characterized in that** the diodes (5) are at least of types that emit red, blue, green light and that the device includes a control unit (6), or at least a connection to a control unit, which is intended to control the intensity of the light emitted by the differently coloured diodes in relation to each other, in order to display different hues of colour on the board (1).

2. A board according to claim 1, **characterized in that** the surface of the board (3) is engraved or otherwise surface-treated, with the intention of diffracting the :light and thus creating light effects.

3. A board according to claim 1, **characterized in that** the display component (3) includes two parallel sheet components (31 and 32), of which the one (31) furthest from the viewer includes a background image, preferably on the surface facing the sheet component (32).

4. A board according to claim 3, **characterized in that** the edge (33) of the rear sheet component (31) facing the light-emitting diodes is made opaque.

5. A board according to claim 2 or 3, **characterized in that** the text of the actual indicator or advertisement and possible engravings are located on the surface furthest from the viewer of the sheet (32) that is closest to the viewer.

6. A board according to any of the above claims, **characterized in that** the light-emitting diodes (5) are located in a protective casing (2) and are in series of three diodes emitting red (R), green (G), and blue (B) light

7. A board according to claim 1, **characterized in that** the control unit (6) includes a memory, in which it is possible to record the necessary control commands.

8. A board according to claim '1, **characterized in that** the board (1) includes a connector to connect it to a device giving control commands, such as a computer.

9. A board according to any of the above claims, **characterized in that** the board includes several successive light panels (4).

10. A board according to any of the above claims, **characterized in that** the protective casing (2) is elongated and opaque and includes an incision (21) in the cover, through which the edge of the sheet-like component (3) is pushed into the casing (2).

## Patentansprüche

1. Anzeigevorrichtung oder Reklametafel (1), bestehend aus einer im Wesentlichen plattenförmigen Anzeigekomponente (3) aus transparentem Material und einer Beleuchtungskomponente (5), die mittels Leuchtdioden (5) realisiert ist, die in der unmittelbaren Nähe der Kante der plattenförmigen Anzeigekomponente angeordnet sind, um die Platte durch die Kante zu auszuleuchten, **dadurch gekennzeichnet, dass** die Dioden (5) zumindest derartig sind, dass sie rotes, blaues, grünes Licht ausstrahlen, und dass die Vorrichtung eine Steuereinheit (6) oder zumindest eine Verbindung zu einer Steuereinheit umfasst, die die Intensität des von den verschiedenfarbigen Dioden ausgestrahlten Lichts im Verhältnis zueinander kontrollieren soll, um verschiedene Farbtöne auf der Tafel (1) anzuzeigen.

2. Tafel nach Patentanspruch 1, **dadurch gekennzeichnet, dass** die Oberfläche der Tafel (3) graviert oder sonst wie oberflächenbehandelt ist, um das Licht abzulenken und somit Lichteffekte zu erzeugen.

3. Tafel nach Patentanspruch 1, **dadurch gekennzeichnet, dass** die Anzeigekomponente (3) zwei parallele Plattenkomponenten (31 und 32) umfasst, von denen diejenige (31) am weitesten weg vom Betrachter ein Hintergrundbild umfasst, bevorzugt auf der der Plattenkomponente (32) zugewandten Oberfläche.

4. Tafel nach Patentanspruch 3, **dadurch gekennzeichnet, dass** die den Leuchtdioden zugewandte Kante (33) der hinteren Plattenkomponente (31) lichtundurchlässig gemacht worden ist.

5. Tafel nach Patentanspruch 2 oder 3, **dadurch gekennzeichnet, dass** der Text der eigentlichen Anzeigevorrichtung oder Reklame und eventuelle Gravierungen auf der vom Betrachter am weitesten weg angeordneten Oberfläche (32) der dem Betrachter am nächsten befindlichen Platte ist.

6. Tafel nach einem der obigen Patentansprüche, **dadurch gekennzeichnet, dass** die Leuchtdioden (5) in einem Schutzgehäuse (2) angeordnet sind und in Sätzen von drei Dioden vorliegen, die rotes (R), grünes (G) und blaues (B) Licht ausstrahlen.

7. Tafel nach Patentanspruch 1, **dadurch gekennzeichnet, dass** die Steuereinheit (6) einen Speicher umfasst, wo die notwendigen Steuerbefehle abgelegt werden können.

8. Tafel nach Patentanspruch 1, **dadurch gekennzeichnet, dass** die Tafel (1) einen Anschluss umfasst, um sie mit einer Steuerbefehle gebenden Vorrichtung, etwa einem Computer zu verbinden.

9. Tafel nach einem der obigen Patentansprüche, **dadurch gekennzeichnet, dass** die Tafel mehrere aufeinanderfolgende Lichtpaneele (4) umfasst.

10. Tafel nach einem der obigen Patentansprüche, **dadurch gekennzeichnet, dass** das Schutzgehäuse (2) länglich und lichtundurchlässig ist und einen Einschnitt (21) in der Abdeckung umfasst, durch die die Kante der plattenförmigen Komponente (3) in das Gehäuse (2) hineingeschoben wird.

## Revendications

1. Panneau indicateur ou publicitaire (1) incluant un composant afficheur (3) essentiellement dans un matériau tel qu'une plaque transparente et un composant éclairant réalisé à l'aide de diodes lumineuses (5), qui sont situées à proximité immédiate du bord du composant afficheur en forme de plaque, afin d'éclairer la plaque à travers le bord, **caractérisé en ce que** les diodes (5) sont au moins de types qui émettent des lumières rouge, bleue et verte et que le dispositif comprend une unité de contrôle (6), ou au moins un raccordement à une unité de contrôle, qui est prévue pour contrôler l'intensité de la lumière émise par les diodes de différentes couleurs les unes par rapport aux autres, afin d'afficher différentes teintes de couleur sur le panneau (1).

2. Panneau selon la revendication 1, **caractérisé en ce que** la surface du panneau (3) est engravée ou autrement traitée en surface, dans le but de diffracter la lumière et de créer ainsi des effets lumineux.

3. Panneau selon la revendication 1, **caractérisé en ce que** le composant afficheur (3) comprend deux composants parallèles en forme de plaque (31 et 32), desquels celui (31) le plus éloigné du visualiseur contient une image de fond, préférablement sur la surface en face du composant plaque (32).

4. Panneau selon la revendication 3, **caractérisé en ce que** le bord (33) du composant plaque arrière (31) en face des diodes lumineuses est rendue opaque.

5. Panneau selon la revendication 2 ou 3, **caractérisé en ce que** le texte indicateur ou publicitaire actuel et les éventuelles engravures sont situés sur la surface la plus éloignée du visualiseur de la plaque (32) qui est la plus près du visualiseur.

6. Panneau selon l'une quelconque des revendications ci-dessus, **caractérisé en ce que** les diodes lumineuses (5) sont situées dans un boîtier protecteur (2) et sont en série de trois diodes émettant une couleur rouge (R), verte (G), et bleu (B).

7. Panneau selon la revendication 1, **caractérisé en ce que** l'unité de contrôle (6) comprend une mémoire, dans laquelle il est possible d'enregistrer les commandes nécessaires.

8. Panneau selon la revendication 1, **caractérisé en ce que** le panneau (1) comprend un connecteur pour le raccorder à un dispositif donnant les commandes, tel un ordinateur.

9. Panneau selon l'une quelconque des revendications ci-dessus, **caractérisé en ce que** le panneau comprend plusieurs panneaux lumineux successifs (4).

10. Panneau selon l'une quelconque des revendications ci-dessus, **caractérisé en ce que** le boîtier protecteur (2) est allongé et opaque et comprend une incision (21) dans le couvercle, à travers laquelle on entre le bord du composant en forme plaque (3) dans le boîtier (2).
